# EUROPEAN PATENT SPECIFICATION

(11) **EP 0 670 865 B1**
(45) Date of publication and mention of the grant of the patent: **19.08.1998**
(21) Application number: 93925048.6
(22) Date of filing: 26.10.1993
(51) Int. Cl.: C08L 75/04, C08K 5/42, D06N 7/00, D06N 3/14

(54) **ANTISTATIC POLYURETHANE BACKED TEXTILES**
ANTISTATISCHE POLYURETHAN RÜCKENBESCHICHTETE TEXTILIEN
TEXTILES ANTISTATIQUES RENFORCES PAR DU POLYURETHANNE

(30) Priority: 24.11.1992 US 980406
(43) Date of publication of application: 13.09.1995
(73) Proprietor: THE DOW CHEMICAL COMPANY, Midland, Michigan 48674 (US)
(72) Inventor: FORTNER, Teresa, Kay 152 Hanover Circle, Calhoun, GA 30701 (US)
(74) Representative: Huber, Bernhard, Dipl.-Chem.
(86) International application number: US9310238
(87) International publication number: WO9412574

(56) References cited:
- EP-A- 0 019 776
- EP-A- 0 340 618
- EP-A- 0 374 860
- WO-A-88/09350
- US-A- 4 657 790

## Description

The present invention relates to a polyurethane backing for textiles. The present invention particularly relates to a static dissipative polyurethane textile backing.

It is known in the art of preparing carpet and other textile products to use polyurethanes as backing materials. Polyurethane backings can add bulk and stiffness to textiles and can secure pile tufts to the primary backing of the textile. Such uses of polyurethane backings is described in, for example, U.S. Patent Number 4,296,159 to Jenkines, et al., and 4,696,849 to Mobley, et al. Polyurethane, in the form of foam backings, can also improve other properties of textiles, particularly properties of textiles used for floor covering, such as, for example, cushioning, while eliminating the need for a separate pad. Such uses are described in, for example, U.S. Patent Number 4,853,054 to Turner, et al., and 5,104,693 to Jenkines.

One property of textiles not usually improved by polyurethane backing is antistatic performance. An antistatic textile is one wherein the textile has sufficient conductivity to allow an electrical charge to flow from an object through the textile to ground, but also having sufficient resistivity that the charge is dissipated comparatively slowly rather than in one instantaneous and possibly damaging discharge. A textile having such properties is, for the purposes of the present invention, an antistatic textile. Static dissipative materials useful for preparing antistatic textiles will generally have a resistivity of 10⁶-10¹² ohms/square.

Polyurethanes, like many other organic polymers, are not naturally conductive. In some applications of textile products, it is undesirable that an object on a textile product acquire a static electrical charge. For example, computers and other electronic equipment can be damaged by electrical discharges due to a build up of static electricity. It can be desirable that the floor coverings and furniture coverings used in such applications be antistatic.

The nonconductive nature of polyurethanes can, in effect, increase the electrical insulative properties of, for example, a carpet, thereby increasing static charge buildup on objects moving on the carpet. There have been attempts to alleviate this problem. For example, U.S. Patent No. 5,028,355 to Cope, et al. discloses preparing conductive polyurethane foams. The foams of Cope are prepared from formulations including up to 2.5 percent picric acid. Picric acid (trinitro phenol), however, is both explosive and corrosive. It would be very expensive to build a facility to prepare materials incorporating picric acid.

U.S. Patent No. 4,806,571, to Knobel, et al. discloses preparing polyurethanes from formulations including a fluoroalkyl sulfonic acid additive and a carboxylic acid or phosphate salt or ester enhancer. However, carpet backings, particularly foamed carpet backings, must have the necessary physical properties to withstand the rigors of carpet applications. Knobel polymers do not have the tough physical properties to be successfully utilized in carpet foam applications.

Accordingly, it would be desirable to prepare textiles with polyurethane backings which are static dissipative. It would be even more desirable to prepare such static dissipative textiles with polyurethane backings having suitable physical properties to permit using the textiles in carpet applications.

In one aspect, the present invention is a polyurethane composition useful for preparing antistatic polyurethane backed textiles prepared from a formulation consisting essentially of: (1) a polyisocyanate; (2) a polyol; and (3) a conductivity inducing agent and optionally including a catalyst, a surfactant, pigments, molecular sieves, flame retardants, antimicrobial materials and blowing agents wherein the conductivity inducing agent is a metal salt of a fluoroalkyl sulfonic acid and there is an absence of a carboxylic acid salt, carboxylic acid ester, or phosphate ester.

In another aspect, the present invention is an antistatic carpet comprising a static dissipative polyurethane wherein the static dissipative polyurethane is a composition of the preceeding paragraph and the static dissipative polyurethane is a layer adherent to a conductive textile substrate.

In one embodiment, the present invention is a static dissipative polyurethane layer adherent to a conductive carpet substrate. The polyurethane layer can take several forms. In one form, it is a cellular polyurethane foam which acts as pad. This application of a polyurethane layer in a carpet is disclosed in, for example, U. S. Patent No. 4,853,054, to Turner, et al. and U.S. Patent No. 5,104,693 to Jenkines, et al.

In another form, the polyurethane layer of the present invention is a microcellular polyurethane textile backing which, when applied to the primary textile backing, can provide dimensional stability and serve to anchor the textile tufts, also known as the face, to the textile primary backing. The microcellular polyurethane of the present invention is useful in the form of a layer adherent to the primary or secondary textile backing serving to provide a suitable surface for the application of a polyurethane foam wherein it is known as a precoat. This application of a polyurethane layer in a carpet is disclosed in, for example, U.S. Patent No. 4,696,849 to Mobley, et al.

In yet another form, the polyurethane layer is a removable adhesive such as that which is disclosed in U.S. Patent No. 5,102,714, also to Mobley. In this form the polyurethane adhesive can function to anchor floor coverings or to anchor protective coverings such as a painter's drop cloth in place. However, the removable character of the adhesive can allow the textile to be removed easily.

The formulations useful for preparing the present invention will vary depending on the form of the polyurethane layer. However, the formulation will include at least the elements of a polyisocyanate, an isocyanate reactive material, and a conductivity inducing agent. The conductivity inducing agents of the present invention are metal salts of fluoroalkyl sulfonic acids.

The cation of the salts can be any metal which forms an ionizable salt with one or more anions, including those metals in Row 2, groups IA and IIA;, Row 3, groups IA, IIA and IIIA; Row 4, groups IA-IVA and IB-VIIIB: Rows 5 and 6, groups IA-VA and IB-VIIIB; and the Lanthanide series of the Periodic Table of the Elements. Preferabiy, the metal is an alkali metal, an alkaline earth metal, Co, Ni, Fe, Cu, Cd, Zn, Sn, Al or Ag, more preferably alkaline earth or alkali metals, most preferably monovalent metals, especially alkali metals.

The fluoroalkyl sulfonic acid anion (fluoroalkyl sulfonate) is suitably any fluoroalkyl sulfonic acid anion compatible with a specific composition in which it is used. Advantageously, preferred fluoroalkyl sulfonates have from one to twenty carbon atoms and are either straight chained, branched or cyclic. Fluoroalkyl sulfonates are sulfonate anions having an alkyl group having fluorine substitution, that is, fluorine atoms bonded to the carbon atoms of the alkyl groups. The alkyl groups, optionally, also have hydrogen atoms and/or other halogen atoms bonded to the carbon atoms. Preferably, at least 25 percent, more preferably 75 percent, (by number) of the atoms other than carbon which are bonded to carbon atoms of the fluoroalkyl groups are halogen, preferably fluorine, More preferably, the fluoroalkyl groups are perhaloalkyl groups, that is, alkyl groups having only halogen substitution. Suitable halogens include fluorine, chlorine, bromine and iodine, preferably fluorine and chlorine. Suitable fluoroalkyl sulfonic acid anions include, for instance, C₂H₂F₃SO₃⁻(tresylate), C₂HF₄SO₃⁻, C₂HClF₃SO₃⁻, C₃H₂F₅SO₃⁻, C₄H₂F₇SO₃⁻, C₅H₂F₉SO₃⁻, C₇ClF₁₄SO₃⁻, C₈C₁₂H₂F₁₃SO₃⁻, and C₂₀ClHF₃₉SO₃.

The fluoroalkyl groups are most preferably perfluoroalkyl groups. Exemplary perfluoroalkyl sulfonic acid anions include, for example CF₃SO₃⁻(triflate), C₂F₅SO₃⁻, C₃F₇SO₃⁻, C₄F₉SO₃⁻(nonaflate), C₅F₁₁SO₃⁻, C₆F₁₃SO₃-, C₇F₁₅SO₃⁻, C₈F₁₇SO₃⁻, and C₉F₁₉SO₃⁻, C₂₀F₄₁SO₃⁻, isomers thereof and mixtures thereof. The salts of perfluoroalkyl sulfonates preferably have from 1 to 20, more preferably from 1 to 10, carbon atoms for reasons of availability and compatibility with polymers.

The fluoroalkyl sulfonic acid salts can be used to prepare the formulations of the present invention without the use of materials to enhance their conductivity inducing effects. The amount of conductivity inducing material which will be included in the polyurethane formulations of the present invention will vary with the native conductivity of the polymer. ln the practice of the present invention, sufficient conductivity enhancing material is included in the formulation to render the polymer static-dissipative. A polyurethane which is comparatively non-static-dissipative can require more conductivity inducing material than a polymer which is comparatively more static-dissipative. However, generally, the amount of conductivity inducing material added to a polymer formulation useful for preparing the polyurethane polymers of the present invention is preferably from 0.005 percent to 1.500 percent, more preferably from 0.010 percent to 1.000 percent and even more preferably from 0.050 to 0.500 percent.

When the polyurethane is in the form of a foamed polyurethane pad, it can be prepared from a formulation including: (1) a polyisocyanate; (2) a polyol; and (3) a conductivity inducing agent, and additionally including such materials as a filler; a catalyst, a surfactant, pigments, molecular sieves, flame retardants, antimicrobial materials and blowing agents. The foamed polyurethane layer functions as an integral foam pad thereby eliminating the need for separate foam pad. The formulation can be any foam formulation known to those skilled in the art of preparing polyurethane foam for carpet applications to be useful. For example, the formulation can be one of those disclosed U.S. Patent No. 4,853,054 to Turner, et al. additionally containing the conductivity inducing agent of the present invention. However, carboxylic acid salts, carboxylic acid esters or phosphate esters are excluded.

In the '054 patent to Turner, it is disclosed that the polyisocyanate can be toluene diisocyanate or a prepolymer thereof with glycerine or trimethylolpropane or mixture thereof with an alkylene glycol or glycol ether, the prepolymer having an average functionality of 2.03 to 2.2. Preferably, the polyisocyanate is a mixture of a liquid methylene diphenyldiisocyanate (MDI) having an equivalent weight of 130 to 200 and polyphenyl polymethylene polyisocyanate (also known as polymeric MDI and hereinafter PMDI), the mixture having an average functionality of 2.03 to 2.2.

The polyol component of the foam formulation can be any polyol or polyol mixture which can be used to prepare a foam which can withstand the rigorous physical property and handling requirements of foams used in carpet applications. The foamed polyurethane polyol component of a Turner '054 type foam is preferably a polyol mixture having as one part of the mixture polyol based on a C₃-C₈ alkylene oxide, which has an equivalent weight of 1000 to 5000, and an internal poly(ethylene oxide) block or a terminal ethylene oxide cap constituting 15 to 30 percent of the weight of the polyol, or mixture of such polyols wherein the polyol or mixture thereof has an average functionality of 1.8 to 2.2. The other portion of the polyol mixture is preferably a minor amount of a low equivalent weight compound having 2 active hydrogen containing groups per molecule.

Another example of the foamed form of the present invention is a polyurethane foam prepared from a formulation such as those disclosed by U.S. Patent No. 5,104,693 to Jenkines additionally comprising the conductivity inducing agent of the present invention. In formulations of this type, the polyol component can be at least one isocyanate reactive material having an average equivalent weight of 1,000 to 5,000. The polyisocyanate can be any polyisocyanate in an amount to provide an isocyanate index of 90 to 130, wherein at least 30 percent by weight of the polyisocyanate is a soft segment prepolymer which is the reaction product of a stoichiometric excess of MDI or a MDI derivative and an isocyanate reactive organic polymer having an equivalent weight from 500 to 5,000, the prepolymer having an isocyanate group content of 10 to 30 percent by weight.

With either type of foam, the blowing agent is preferably air, however, other gasses, such as carbon dioxide, and nitrogen can be used. It is preferably injected into the polymer by frothing. The fillers can be aluminum trihydrate, calcium carbonate, barium sulfate or mixtures thereof.

When the polyurethane is in the form of a microcellular static dissipative polyurethane, it can be prepared from a formulation including: (1) a polyisocyanate; (2) a polyol; and (3) a conductivity inducing agent, and additionally including such materials as a filler; a catalyst, a surfactant, pigments, molecular sieves, flame retardants, antimicrobial materials and blowing agents. Any formulation known to those skilled in the art of preparing polyurethanes for carpet applications can be used to prepare the polymers of the present invention except that they will additionally have a conductivity inducing agent of the present invention. Polymers of this type are generally applied to textiles as an unfoamed, non cellular layer which functions to stiffen a textile and to adhere the tufts to the textile to the primary backing. Particularly when the polyurethane layer is a precoat, the polyisocyanate can be, for example, MDI or an MDI prepolymer or a modified MDI material.

For example, the polyol component of a microcellular polyurethane can include a first polyol which comprises a relatively high equivalent weight polyol containing an average of 1.4-1.95 hydroxyl groups per molecule, of which hydroxyl groups at least 30 percent are primary hydroxyls or a mixture thereof with at least one additional relatively high equivalent weight polyol containing at least 2.05 hydroxyl groups per molecule, of which at least 30 percent are primary hydroxyls. Additionally the polyol component can include a relatively low equivalent weight compound having about 2 active hydrogen containing moieties per molecule. Desirably, the polyol component has an average functionality of 1.97-2.03. The polyurethane is preferably prepared such that the polyisocyanate and the polyol component has an isocyanate index of 85-125.

When the polyurethane polymer of the present invention is prepared in the form of a removable adhesive, it can be prepared from a formulation including: (1) a polyisocyanate; (2) a polyol; and (3) a conductivity inducing agent. The formulation is applied in the form of a tacky adhesive, preferably to a precoat layer. The polyisocyanate can have an average functionality of 2.2 or less.

The polyol component of the removable adhesive can be a complex admixture. It can have, as a first component, a mixture of a monoalcohol and a polyether or polyester polyol, the mixture having an average actual functionality of 2.2 or less, an equivalent weight of at least 500 and containing from 10 to 70 mole percent monoalcohol. As a second component, the polyol can have less than 10 weight percent, based on the weight of the first polyol component of a compound or mixture of compounds having at least two active hydrogen containing groups per molecule and an equivalent weight from 30 to 500.

The polyurethane polymer adhesive, when prepared by the method of U.S. Patent 5,102,704 to Mobley, is prepared with no more than 0.1 percent water present. The polyurethane adhesive is prepared at an isocyanate index of from 85 to 115. The adhesive can contain other additives such as catalysts and fillers. However, preferably, it contains no blowing agent. If a blowing agent is used, the blowing agent is selected such that the proscription of 0.1 percent water is not exceeded.

Polyurethane catalysts can be suitably used with all forms of the present invention. The catalyst is preferably incorporated into the formulation in an amount suitable to increase the rate of reaction between the polyisocyanate and the polyol components of the present invention. Although a wide variety of materials is known to be useful for this purpose, the most widely used and preferred catalysts are the tertiary amine catalysts and the organotin catalysts.

Examples of the tertiary amine catalysts include, for example, triethylenediamine, N-methyl morpholine, N-ethyl morpholine, diethyl ethanolamine, N-coco morpholine, 1-methyl-4-dimethylaminoethyl piperazine, 3-methoxy-N-dimethylpropylamine, N,N-diethyl-3-diethyl aminopropylamine, and dimethylbenzyl amine. Tertiary amine catalysts are advantageously employed in an amount from 0.01 to 2 percent by weight of the polyol formulation.

Examples of effective catalysts include those taught in, for example, U.S. Patent No. 2,846,408. Preferably the organotin catalyst is employed in an amount from 0.001 to 0.5 percent by weight of the polyol formulation.

The conductivity inducing agents of the present invention can have minimal effect upon the curing times of polyurethane formulations. The agents will generally neither substantially accelerate nor substantially slow polyurethane cure. This is particularly important in antistatic polyurethane foam backed textile production. In commercial carpet manufacturing operations, production equipment is often sized based upon the cure time of the foam. For example, if it is desirable to run the textile through the foam backing application device at a rate of x feet per second, and it is known that the foam will cure in y seconds, then there needs to be x times y feet of carpet between the point of foam application and the point at which the foam must be cured. If a conductivity inducing agent were to significantly affect the cure time of a polyurethane, it could result in undesirable quick cures wherein the polymer might delaminate from the textile, or in a too slow cure wherein the foam layer might be deformed or be squeezed out of the carpet and damage the carpet facing.

Although they can be admixed with polyisocyanates, the conductivity inducing agents of the present invention are desirably added to the non-polyisocyanate component of the formulations of the present invention. For example, when preparing a antistatic foam backed textile, the individual components of the polyurethane formulation are mixed and added as a layer of preferably uniform thickness on the textile.

It is often preferable to premix all of the components except the polyisocyanate (and the blowing agent when a gas is used) to form a "B" component. The polyisocyanate and the B component are admixed and then the gas is blended in using, for example, an OAKES FROTHER* (*OAKES FROTHER is a trade designation of the E.T. Oakes Corporation). The polyurethane forming composition is then applied to one side of the textile prior to it curing to a tacky state. The composition is preferably applied prior to any significant level of curing using equipment such as a doctor knife, air knife, or extruder to apply and gauge the layer. In the alternative, the forming polyurethane can be applied by forming it into a layer using a moving belt, allowing it to partially cure, and then marrying it to the textile using equipment such as a double belt laminator. After application of the foam layer, the polyurethane is cured by applying heat by means of an infrared oven or heated plates.

Preferably, the conductivity inducing agents of the present invention are not kept in extended contact with urethane catalysts. Overnight exposure of urethane catalysts to the conductivity inducing agents of the present invention can deactivate the urethane catalyst. Preferably the catalyst or the conductivity inducing agents of the present invention are added to a polyurethane formulation immediately before the reactants are admixed to form a polymer. For example, the conductivity inducing agents or the urethane catalysts can be added as a side stream into a frother as it is used to prepare a static dissipative polyurethane foam backed textile.

Textiles useful with the present invention are conductive and can include broadloom carpet, automotive carpet, fabrics for automotive trim and automotive trunk liners. In addition, the conductive textiles useful with the present invention can include synthetic playing surfaces, woven polymeric scrim, nonwoven polymeric scrim, wall coverings, sheet polymers, and furniture covers. One preferred embodiment of the present invention is antistatic carpet tile prepared by incorporating the conductivity inducing agents of the present invention into carpet tile production process such as that disclosed in U.S. Patent No. 4,657,790 to Wing, et al. The '790 Wing, et al. patent is incorporated herein by reference.

Non-textile materials commonly used to prepare textiles can also be used with the present invention. For example, conductive latex precoats and adhesives can be used with the present invention to prepare antistatic carpets. Other adhesives, and coatings can be used with the present invention as long as they are either conductive, or do not substantially interfere with the antistatic character of the components of the antistatic carpets of the present invention.

The antistatic textiles of the present invention are preferably polyurethane backed antistatic carpets. These carpets can have the static dissipative polyurethane textile backings of the present invention in one, two or even all three of the forms disclosed above. For example, antistatic carpets can have a conductive textile layer, having a static dissipative precoat, a static dissipative foam layer and a static dissipative removable adhesive layer too. Or the carpet could have just a foam layer, or no foam layer but a precoat and an adhesive layer. All these are embodiments of the present invention also.

When the present invention is used to prepare antistatic carpets, the carpets will desirably achieve at least a minimum antistatic performance characterized by a horizontal resistivity of at least 0.15 mega ohms and no more than 2,000 mega ohms; and a vertical resistivity of at least 0.15 mega ohms and no more than 20,000 megohms. Preferably, the resistivity of the carpet will be, in both directions, from 1 to 1,000 mega ohms, and even more preferably, from 1 to 100 mega ohms.

In addition to antistatic carpets, the present invention can be used to prepare antistatic furniture covers, and antistatic wall coverings. Useful applications of the present invention include unusual applications such as a an antistatic drop cloth having one side coated with a removable adhesive.

Unlike the prior art, the polyurethanes of the present invention are not prepared with enhancers as are the polymers disclosed in references including 4,806,571 to Knobel. It is believed that the "enhancers" of Knobel can degrade physical properties necessary to carpet applications. Therefore, the polymers of the present invention are prepared in the substantial obsence of enhancers such as those disclosed by Knobel.

The following examples are provided to illustrate the present invention. The examples are not intended to limit the scope of the invention and they should not be so interpreted. Amounts are in weight parts per hundred part of polyol (pph) unless otherwise indicated.

### EXAMPLE 1

An static dissipative polyurethane foam was prepared by admixing: 46.15 pph of a 2,000 equivalent weight ethylene oxide capped propylene oxide based polyether triol; 46.15 pph of a 2,000 equivalent weight ethylene oxide capped propylene oxide based polyether diol; 7.7 pph diethylene glycol; 0.27 pph FLUORAD FC-98* which is a commercially available salt of a perfluoroalkyl sulfonic acid having an average atomic composition of K⁺C₆F₁₃SO₃⁻ (*FLUORAD FC-98 is a trade designation of the 3M Corporation); 2.43 pph of a 1,000 equivalent weight ethylene oxide capped propylene oxide based polyether diol; 0.076 pph 1,8-diazabicyclo (5.4.0) undecane catalyst; 2 pph L-5614* silicone surfactant; 17.85 pph of a dipropylene glycol/tripropylene glycol MDI prepolymer having an isocyanate equivalent weight of 181; and 17.85 parts PMDI having a functionality of 2.2 to 2.3 and an isocyanate equivalent weight of 133 (*L-5614 is a trade designation of Union Carbide Corp.). The foam formulation is admixed by means of a 2 inch (5.1 cm) OAKES FROTHER having a compound temperature setting of 58°F (14°C), an isocyanate temperature of 72°F (22°C), an exit temperature of 84°F (29°C), and producing a froth having a cup weight of 500 g/quart (528 g/L). The frothed forming polyurethane foam was applied to a teflon belt to allow for easy removal. The foam was tested and the results were reported in Table 1.

### COMPARATTVE EXAMPLE 2

A foam was prepared and tested substantially identically to the foam of Example 1 except that no FLUORAD FC-98 or 1,000 equivalent weight ethylene oxide capped propylene oxide based polyether diol was included in the formulation. The test results are reported in Table 1.

### COMPARATIVE EXAMPLE 3

A foam was prepared and tested substantially identically to the foam of Example 1 except that no FLUORAD FC-98 or 1,000 equivalent weight ethylene oxide capped propylene oxide based polyether diol was included in the formulation and 9 pph of a mixture of 42.88 percent 3,100 molecular weight polyether triol; 15.38 percent 700 molecular weight polyether triol; 38.46 percent dibutoxyethoxyethyadipate; and 3.08 percent FLUORAD FC-98 (thereby having the same concentration of FC-98 as Example 1); was included in the formulation, the mixture being commercially available as STATURE II* (*STATURE II is a trade designation of The Dow Chemical Company). The test results are reported in Table 1.

**Table 1**

| | | Example 1 | Comparative Example 2 | Comparative Example 3 |
|---|---|---|---|---|
| Density¹ lbs/ft³ (kg/m³) | | 23.1 (370) | 22.2 (356) | 21.6 (346) |
| Thickness¹ in. (cm) | | 0.213 (0.54) | 0.221 (0.56) | 0.221 (0.56) |
| 50% Compression set¹ (percent) | | 6.5 | 7.3 | 6.0 |
| 25% Compression resistance² psi (kPa) | | 53.9 (0.372) | 48.2 (0.332) | 26.0 (0.179) |
| Tensile³ psi (kPa) | | 106.1 (0.731) | 101.0 (0.696) | 60.8 (0.419) |
| Cure Test minutes⁴ | 2 | CURED | CURED | CURED |
| | 3 | CURED | CURED | CURED |
| | 5 | CURED | CURED | CURED |
| Horizontal Resistivity⁵ mega ohms | | 34 | 22,000 | 55 |
| Vertical Resistivity⁶ mega ohms | | 37 | 31,000 | 47 |

| | | | | |
|---|---|---|---|---|
| Comparatives not examples of the present invention. ¹ ASTM D 3676-78 (Reapproved 1989) Standard Specification for Rubber Cellular Cushion Used for Carpet or Rug Underlay. | | | | |
| ² A circular compression probe having a surface area 1 in² (6.45 cm²) was used to compress the foam to 75 percent of its original thickness. The load required to make the compression was reported. | | | | |
| ³ ASTM 3574-91 Standard Test Method for Flexible Cellular Materials-- Slab, Bonded, and Molded Urethane Foams. | | | | |
| ⁴ Cure was determined by making an indention in the foam. If the foam was sticky, it was reported as being tacky. The foam was reported to be cured when the foam recovers 100 percent of its original height. | | | | |
| ⁵ Horizontal resistivity was determined by placing two electrodes on the face of the sample and applying a 500 volt charge. Resistivity was measured and reported. | | | | |
| ⁶ Vertical resistivity was determined by placing a sample on conductive metal plate. A positive electrode was placed on the sample and a negative electrode was placed on the metal place. A 500 volt charge was applied and resistivity was measured and reported. | | | | |

### EXAMPLE 4

A foam was prepared and tested substantially identically to the foam of Example 1 except that the formulation additionally contains 80 pph alumina trihydrate, 1 pph molecular sieve 3A, and 20 pph kaolin clay filler. The test results are reported in Table 2.

### COMPARATIVE EXAMPLE 5

A foam was prepared and tested substantially identically to the foam of Example 4 except that no FLUORAD FC-98 or 1,000 equivalent weight ethylene oxide capped propylene oxide based polyether diol was included in the formulation. The test results are reported in Table 2.

### COMPARATIVE EXAMPLE 6

A foam was prepared and tested substantially identically to the foam of Example 4 except no FLUORAD FC-98 or 1,000 equivalent weight ethylene oxide capped propylene oxide based polyether diol was included in the formulation and 9 pph STATURE II was included in the formulation. The test results are reported in Table 2.

**Table 2**

| | | Example 4 | Comparative Example 5 | Comparative Example 6 |
|---|---|---|---|---|
| Density lbs/ft³ (kg/m³) | | 23.3 (373) | 23.1 (370) | 21.6 (346) |
| Thickness in. (cm) | | 0.191 (0.49) | 0.196 (0.50) | 0.188 (0.48) |
| 50% Compression set percent | | 2.9 | 3.1 | 3.9 |
| 25% Compression resistance psi (kPa) | | 32.8 (0.226) | 31.4 (0.216) | 22.9 (0.158) |
| Tensile psi (kPa) | | 98.4 (0.678) | 95.5 (0.655) | 73.3 (0.505) |
| Cure Test minutes | 2 | CURED | CURED | TACKY |
| | 3 | CURED | CURED | NOT CURED |
| | 5 | CURED | CURED | CURED |
| Horizontal Resisitiity mega ohm | | 52 | 6,000 | 55 |
| Vertical Resistivity mega ohm | | 55 | 3,867 | 47 |
| Comparatives were not examples of the present invention. Refer to Table 1 for testing specifications. | | | | |

### EXAMPLE 7

An antistatic carpet having an static dissipative polyurethane foam backing was prepared by applying a forming static dissipative polyurethane foam to a textile consisting of 24 oz/yd² (0.74 kg/m³) griege good having a conductive filament every 1/4 in. (0.64 cm) and a conductive primary backing which was a woven polypropylene scrim also having conductive filaments. A foam formulation substantially identically to that of Example 1 was applied to the primary backing using a 2 inch (5.1 cm) OAKES FROTHER at the same operating conditions as in Example 4. A secondary backing also consisting of a woven polypropylene scrim also having conductiveä filaments was applied to the static dissipativeä polyurethane foam. The carpet was tested fora resistivity and found to have a horizontal resistivityä of 75 mega ohms and a vertical resistivity of 75 megaa ohms.

### EXAMPLE 8

An antistatic carpet was prepared substantially identically to Example 7 except that a static dissipative polyurethane precoat was applied to the conductive primary backing prior to the application of the static dissipative polyurethane foam. The precoat was prepared from a formulation consisting of 75 pph of an ethylene oxide capped propylene oxide polyether polyol diol having an equivalent weight of 1,000; 10 pph of an ethylene oxide capped propylene oxidea polyether polyol triol having an equivalent weight of 1,600; 5 pph of a propylene oxide adduct of aniline having an OH equivalent weight of 106; 5 pph of a propylene oxide polyether polyol having a functionality of 4.6 and an equivalent weight of 126; 5 pph butanediol; 1 pph triethanol amine; 140 pph alumina trihydrate; 2 pph molecular sieve 3A; 0.15 pph 1,8-diazabicyclo (5.4.0) undecane catalyst; 20 pph kaolin clay filler; 0.1 pph FLUORAD FC-98; 0.9 pph of an ethylene oxide capped propylene oxide polyether polyol triol having an equivalent weight of 1,000 and 43.9 pph of a polycarbodiamide modified MDI having an isocyanate equivalent weight of about 143. The precoat was applied by admixing the precoat formulation, puddling the precoat forming polymer onto the conductive griege goods, drawing a metal blade down the griege goods to spread the precoat polymer and curing the polymer for 10 minutes at 270°F (132°C). The carpet was tested for resistivity and found to have a horizontal resistivity of 42.5 mega ohms and a vertical resistivity of 40 mega ohms.

## Claims

1. A polyurethane composition useful for preparing antistatic polyurethane backed textiles prepared from a formulation consisting essentially of:
(1) a polyisocyanate;
(2) a polyol; and
(3) a conductivity inducing agent
and optionally including a catalyst, a surfactant, pigments, fillers, molecular sieves, flame retardants, antimicrobial materials and blowing agents, wherein the conductivity inducing agent is a metal salt of a fluoroalkyl sulfonic acid and there is an absence of a phosphate ester, a salt of a carboxylic acid or an ester of a carboxylic acid.

2. The polyurethane composition of Claim 1 wherein the conductivity inducing agent is a metal salt of a perfluoroalkyl sulfonic acid.

3. The polyurethane composition of Claim 2 wherein the metal salt of a perfluoroalkyl sulfonic acid includes a cation and the cation is an alkali metal.

4. The polyurethane composition of claim 3 wherein the metal salt of a perfluoroalkyl sulfonic acid has an average atomic composition K⁺C₆F₁₃SO₃⁻.

5. An antistatic carpet comprising a static dissipative polyurethane wherein the static dissipative polyurethane is a composition of Claim 1 and the static dissipative polyurethane is a layer adherent to a conductive textile substrate.

6. The antistatic carpet of Claim 5 wherein the static dissipative polyurethane layer is a precoat.

7. The antistatic carpet of Claim 5 wherein the static dissipative polyurethane layer is a foam pad.

8. The antistatic carpet of Claim 5 wherein the static dissipative polyurethane layer is a removable adhesive.

9. The antistatic carpet of Claim 5 wherein the carpet is a composite of a conductive textile, a static dissipative polyurethane precoat and a static dissipative polyurethane foam integral pad.

10. The antistatic carpet of Claim 9 wherein the carpet is a composite of a conductive textile, a static dissipative polyurethane precoat, a static dissipative polyurethane foam pad and a static dissipative removable adhesive.

11. A method for preparing antistatic textiles comprising applying a static dissipative polyurethane backing of Claim 1 to a conductive textile.

## Patentansprüche

1. Polyurethanzusammensetzung, die geeignet ist zur Herstellung von antistatischen polyurethanrückenbeschichteten Textilien, hergestellt aus einer Formulierung, welche im wesentlichen aus
(1) einem Polyisocyanat,
(2) einem Polyol und
(3) einem Leitfähigkeit induzierenden Mittel
besteht und gegebenenfalls einen Katalysator, ein oberflächenaktives Mittel, Pigmente, Füllstoffe, Molekularsiebe, Flammschutzmittel, antimikrobielle Materialien und Treibmittel umfaßt, worin das Leitfähigkeit induzierende Mittel ein Metallsalz einer Fluoralkylsulfonsäure ist und ein Phosphatester, ein Carbonsäuresalz oder ein Carbonsäureester nicht vorhanden ist.

2. Polyurethanzusammensetzung nach Anspruch 1,
worin das Leitfähigkeit induzierende Mittel ein Metallsalz einer Perfluoralkylsulfonsäure ist.

3. Polyurethanzusammensetzung nach Anspruch 2,
worin das Metallsalz einer Perfluoralkylsulfonsäure ein Kation umfaßt und das Kation ein Alkalimetall ist.

4. Polyurethanzusammensetzung nach Anspruch 3,
worin das Metallsalz einer Perfluoralkylsulfonsäure eine durchschnittliche atomare Zusammensetzung K⁺C₆F₁₃SO₃⁻ hat.

5. Antistatischer Teppichboden umfassend ein Statik ableitendes Polyurethan, worin das Statik ableitende Polyurethan eine Zusammensetzung nach Anspruch 1 ist und das Statik ableitende Polyurethan eine Schicht ist, die an einem leitfähigen Textilsubstrat haftet.

6. Antistatischer Teppichboden nach Anspruch 5,
worin die Statik ableitende Polyurethanschicht eine Vorbeschichtung ist.

7. Antistatischer Teppichboden nach Anspruch 5,
worin die Statik ableitende Polyurethanschicht eine Schaumlage ist.

8. Antistatischer Teppichboden nach Anspruch 5,
worin die Statik ableitende Polyurethanschicht ein entfernbares Haftmittel ist.

9. Antistatischer Teppichboden nach Anspruch 5,
worin der Teppichboden ein Verbundstoff aus einem leitfähigen Textil, einer Statik ableitenden Polyurethanvorbeschichtung und einer integralen Statik ableitenden Polyurethanschaumlage ist.

10. Antistatischer Teppichboden nach Anspruch 9,
worin der Teppichboden ein Verbundstoff aus einem leitfähigen Textil, einer Statik ableitenden Polyurethanvorbeschichtung, einer Statik ableitenden Polyurethanschaumlage und einem Statik ableitenden entfernbaren Haftmittel ist.

11. Verfahren zur Herstellung von antistatischen Textilien umfassend das Auftragen einer Statik ableitenden Polyurethanrückenbeschichtung nach Anspruch 1 auf ein leitfähiges Textil.

## Revendications

1. Composition de polyuréthanne utilisable pour préparer des textiles antistatiques renforcés par du polyuréthanne préparée à partir d'une formulation se composant essentiellement:
(1) d'un polyisocyanate;
(2) d'un polyol; et
(3) d'un agent induisant la conductivité
et comprenant éventuellement un catalyseur, un tensioactif, des pigments, des charges, des tamis moléculaires, des agents ignifuges, des matières anti-microbiennes et des agents d'expansion, dans lequel l'agent induisant la conductivité est un sel métallique d'un acide fluoroalkylsulfonique et dans laquelle il y a absence d'ester phosphate, de sel d'un acide carboxylique ou d'ester d'un acide carboxylique.

2. Composition de polyuréthanne selon la revendication 1, dans laquelle l'agent induisant la conductivité est un sel métallique d'un acide perfluoroalkylsulfonique.

3. Composition de polyuréthanne selon la revendication 2, dans laquelle le sel métallique d'un acide perfluoroalkylsulfonique inclut un cation, et le cation est un métal alcalin.

4. Composition de polyuréthanne selon la revendication 3, dans laquelle le sel métallique de l'acide perfluoroalkylsulfonique possède une composition atomique moyenne K⁺C₆F₁₃SO₃⁻.

5. Tapis antistatique comprenant un polyuréthanne dissipant l'électricité statique dans lequel le polyuréthanne dissipant l'électricité statique est une composition selon la revendication 1 et le polyuréthanne dissipant l'électricité statique est une couche adhérant au substrat textile conducteur.

6. Tapis antistatique selon la revendication 5, dans lequel la couche de polyuréthanne dissipant l'électricité statique est un prérevêtement.

7. Tapis antistatique selon la revendication 5, dans lequel la couche de polyuréthanne dissipant l'électricité statique est une semelle en mousse.

8. Tapis antistatique selon la revendication 5, dans lequel la couche de polyuréthanne dissipant l'électricité statique est un adhésif décollable.

9. Tapis antistatique selon la revendication 5, dans lequel le tapis est un composite d'un textile conducteur, d'un prérevêtement de polyuréthanne dissipant l'électricité statique et d'une semelle intégrée de mousse de polyuréthanne dissipant l'électricité statique.

10. Tapis antistatique selon la revendication 9, dans lequel le tapis est un composite d'un textile conducteur, d'un prérevêtement de polyuréthanne dissipant l'électricité statique, d'une semelle de mousse de polyuréthanne dissipant l'électricité statique et d'un adhésif décollable dissipant l'électricité statique.

11. Procédé pour préparer des textiles antistatiques comprenant l'application d'un renfort de polyuréthanne dissipant l'électricité statique selon la revendication 1 à un textile conducteur.
